(19) Europäisches Patentamt / European Patent Office / Office européen des brevets

(11) **EP 4 108 534 B1**

(12) **EUROPEAN PATENT SPECIFICATION**

(45) Date of publication and mention
of the grant of the patent:
**03.04.2024   Bulletin 2024/14**

(21) Application number: **22179864.8**

(22) Date of filing: **20.06.2022**

(51) International Patent Classification (IPC):
***B60W 30/12*** *(2020.01)*      ***B60W 50/14*** *(2020.01)*

(52) Cooperative Patent Classification (CPC):
**B60W 30/12; B60W 50/14;** B60W 2420/403;
B60W 2420/408; B60W 2520/12; B60W 2520/125;
B60W 2552/53; B60W 2554/4044; B60W 2556/50

(54) **METHOD AND SYSTEM FOR DETECTING A LANE DEPARTURE EVENT**

VERFAHREN UND SYSTEM ZUM DETEKTIEREN EINES SPURVERLASSENSEREIGNISSES

PROCÉDÉ ET SYSTÈME DE DÉTECTION D'UN ÉVÉNEMENT DE SORTIE DE VOIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **25.06.2021   GB 202109215**

(43) Date of publication of application:
**28.12.2022   Bulletin 2022/52**

(73) Proprietor: **Aptiv Technologies Limited
St. Michael (BB)**

(72) Inventors:
• **Svensson, Viktor
43130 Mölndal (SE)**
• **Wallin, John Patrik
41262 Gothenburg (SE)**

(74) Representative: **Gaunt, Thomas Derrick
Lewis Silkin LLP
Arbor
255 Blackfriars Road
London SE1 9AX (GB)**

(56) References cited:
**EP-A1- 1 531 102        EP-A1- 2 535 882
US-A1- 2007 069 874**

## Description

### Technical field

The present invention relates to detecting a lane departure event in a vehicle.

### Background

In recent years, systems have been developed in which various aspects of the control of a vehicle have been automated. Such systems include advanced driver assistance systems (ADAS). Example features of ADAS include functionalities such as lane departure warning systems (LDWS) and lane-keeping-assistance (LKA). Such systems allow a vehicle's position in a lane to be monitored and controlled.

LDWS and LKA systems are useful in situations that may arise if a driver were to lose focus while driving. For example, the driver may be distracted for various reasons or become drowsy. At such times, the driver may involuntarily cause the vehicle to drift laterally, either partially or completely, out of its current lane. Such an event can be extremely dangerous and may cause the driver to run the vehicle off the road, drift into an oncoming lane or crash into adjacent traffic.

In order to prevent involuntary lane departures, LKA systems detect that the vehicle will soon drift out of its current lane and assist the driver by outputting a warning to the driver and/or by intervening in the control of the vehicle in order to steer the vehicle automatically back into its original lane. LKA systems measure a property known as the time-to-lane boundary (TTLB) value. The TTLB is the time until the vehicle is estimated to reach the lane boundary, as determined by the LKA system. The warning signal or system intervention is triggered when the determined TTLB value drops below a TTLB threshold value.

An important consideration for LKA systems is when to trigger such a driver warning or automatic intervention to keep the vehicle in lane. If the LKA system's action is triggered too soon then it may be that the action is not necessary since the driver might actually be in full control of the vehicle. Unnecessary triggering of the LKA system may cause an annoyance to the driver and may reduce the driver's confidence in the system. On the other hand, late triggering of the LKA system could mean that it is too late for the driver to react to the warning signal or for the LKA system to correct the vehicle's course. The implication of the latter scenario is that it may not be possible to prevent the vehicle from leaving the lane which is very dangerous.

The triggering thresholds can depend on various parameters such as road geometry, for example the type of lane boundary and the lane width, with different triggering thresholds being stored in look-up tables (LUTs).

In a particular LUT, a set of TTLB threshold values are stored, each TTLB threshold value corresponding to an associated value of the lateral speed of the vehicle. As the lateral speed of the vehicle is measured, the corresponding TTLB threshold value stored in the LUT is identified and is used as the threshold for triggering a lane departure signal. Where the current lateral speed is between two stored lateral speed values, a TTLB threshold value may be determined by interpolation of the TTLB threshold values corresponding to the lateral speed values that bound the current lateral speed value. The current TTLB value of the vehicle is calculated by the vehicle and compared with the determined TTLB threshold value. If the current TTLB value is below the TTLB threshold value then a lane departure signal may be triggered.

A drawback with this approach is the number of LUTs that are required in order to account for varying road conditions. For example, separate LUTs are required for the scenarios of (i) the vehicle is approaching a lane boundary along a substantially straight lane, (ii) the vehicle is approaching a lane boundary located at the inner edge of a curved lane and (iii) the vehicle is approaching a lane boundary located at the outer edge of a curved lane. Further LUTs are also required for the scenario where the lane is narrow (i.e. below a predetermined width) and where the lane boundary is at a road edge.

However, the fact that there are many parameters means that the amount of data stored in such LUTs can become very cumbersome. Furthermore, the threshold values themselves are determined manually by engineers in the field and require a great deal of fine tuning to find the optimum values. This can be both expensive and time consuming.

US 2007/0069874 A1 discloses a lane departure detection system in which the time-to-lane crossing TTLC threshold is adapted based on the speed, yaw rate and/or lateral acceleration.

### Summary

According to a first aspect of the present invention there is provided a computer-implemented method of detecting a lane departure event, the method comprising obtaining a lateral acceleration value of the vehicle; determining a time-to-lane boundary, TTLB, threshold value using a saturated linear function of the lateral acceleration value of the vehicle; determining a current TTLB value of the vehicle with respect to a lane boundary; comparing the current TTLB value to the TTLB threshold value; and outputting a signal indicative of vehicle proximity to the lane boundary if the current TTLB value satisfies a triggering condition with respect to the TTLB threshold value.

The method may further comprise determining a lateral speed value of the vehicle towards the lane boundary and a lane width value of the lane in which the vehicle is travelling.

The saturated linear function used to determine the TTLB threshold value may be a saturated linear function of the lateral speed of the vehicle towards the lane boundary, the lane width value and the lateral acceleration value of the vehicle.

Determining the lane width may comprise analysing images of a road surface obtained from a camera system of the vehicle.

Obtaining a lateral acceleration value of the vehicle may comprise obtaining lateral acceleration data from an inertial measurement unit of the vehicle.

The method may further comprise determining if an additional traffic condition is present; and applying a weighting associated with the additional traffic condition to the saturated linear function in response to determining that the additional traffic condition is present.

The additional traffic condition may be an oncoming traffic condition.

The additional traffic condition may be a road edge condition.

Outputting a signal indicative of vehicle proximity to a lane boundary may comprise outputting a control signal to a vehicle control module to cause a correction to the vehicle course.

Outputting a signal indicative of vehicle proximity to a lane boundary may comprise outputting a warning signal to a driver of the vehicle.

According to a second aspect of the present invention there is provided a computer program comprising computer-readable instructions which, when executed by a processor, cause the processor to execute the method of any preceding claim.

According to a third aspect of the present invention there is provided a lane keeping assistance, LKA, system for detecting a lane departure event of a vehicle, the lane keeping assistance system comprising a time to lane boundary, TTLB, threshold determination unit configured to: obtain a lateral acceleration value of the vehicle; and determine a TTLB threshold value using a saturated linear function of the lateral acceleration value of the vehicle; a TTLB determination unit configured to determine a current TTLB value of the vehicle with respect to a lane boundary; and a lane boundary proximity determination unit configured to: compare the current TTLB value to the TTLB threshold value; and output a signal indicative of vehicle proximity to the lane boundary if the current TTLB value satisfies a triggering condition with respect to the TTLB threshold value.

The TTLB threshold determination unit may be further configured to obtain a lateral speed value of the vehicle towards the lane boundary and a lane width value of the lane in which the vehicle is travelling.

The saturated linear function used to determine the TTLB threshold value may be a saturated linear function of the lateral speed of the vehicle towards the lane boundary, the lane width value and the lateral acceleration value of the vehicle.

The TTLB threshold determination unit may be further configured to: determine if an additional traffic condition is present; and apply a weighting associated with the additional traffic condition to the saturated linear function in response to determining that the additional traffic condition is present.

## Brief description of the drawings

So that the present invention may be fully understood by the skilled person, examples will be described with reference to the accompanying drawings, in which:

Figure 1 illustrates a vehicle driving along a road divided into multiple lanes;

Figure 2 is a schematic block diagram illustrating a vehicle system;

Figure 3 is a schematic block diagram illustrating a lane keeping assistance system;

Figure 4 is a plot illustrating a saturated linear function; and

Figure 5 is a flow chart illustrating operations carried out by embodiments of the present invention.

## Detailed Description

Example embodiments of the present invention described herein provide an improved method and system for detecting lane departure events. The lateral acceleration of the vehicle is monitored, the value of which is input into a saturated linear function to determine a threshold value for the time-to-lane boundary (TTLB) value. The current TTLB value of the vehicle is determined and compared with the determined TTLB threshold value. If the current TTLB value is less than the determined threshold value then a signal is output indicative of vehicle proximity to a lane boundary. Such vehicle proximity to a lane boundary indicates the possibility of a lane departure event. The signal that is output may be a warning signal to the driver of the vehicle. Additionally or alternatively, a signal may be output to a control unit of the vehicle to steer the vehicle back into the lane.

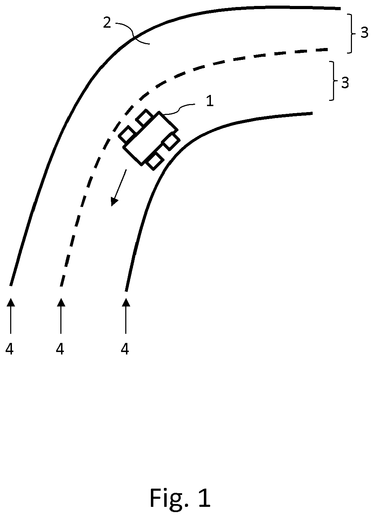

Figure 1 is an illustration of a vehicle 1 driving along a road 2. The vehicle may be an ego vehicle and may be partially or fully automated. The road 2 along which the vehicle 1 is driving may be divided into lanes 3. Each lane 3 is delimited on either side by a lane boundary 4. Examples of lane boundaries include lane markers, which separate adjacent lanes from each other. The markings used to separate lanes from each other may differ depending on the type of lane. For example, adjacent lanes on a dual carriageway, motorway, or interstate highway may be separated by lane markings of a particular type. Adjacent lanes on a single carriageway road may be separated by lane markings of a different type. Another example of a lane boundary is a road edge. Vehicles, especially, automated vehicles may be provided with camera vision systems arranged to capture images and/or video of the road surface and to use deep learning techniques to determine the position and type of lane boundaries.

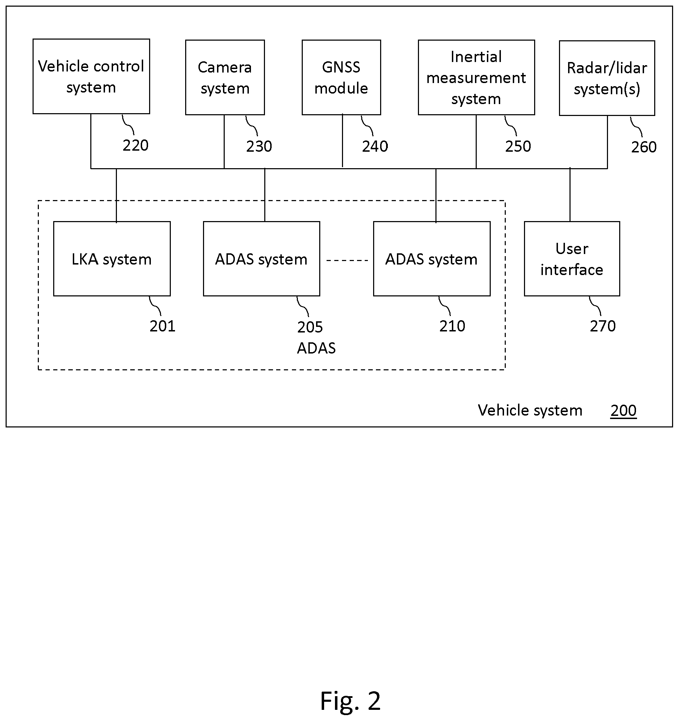

Figure 2 is a schematic block diagram illustrating components of a vehicle system 200. The vehicle system 200 includes a lane keeping assistance (LKA) system 201. The LKA system 201 may be one of various subsystems 205, 210 of an advanced driver assistance system (ADAS). The LKA system 200 may interact with other advanced driver assistance systems and with a vehicle control system 220 that is operable to control the movement (such as steering, acceleration and braking) of the vehicle. Other advanced driver assistance systems may include adaptive cruise control, anti-lock braking system, automatic parking, blind spot monitor, collision avoidance system and so forth.

The vehicle system 200 includes a camera system 230, a global navigation satellite system (GNSS) module 240, an inertial measurement unit (IMU) 250, radar and/or lidar systems 260 and a user interface 270.

The camera system 230 includes one or more cameras that are mounted on the vehicle 1 to provide images and/or video of the road surface along which the vehicle 1 is driving. The one or more cameras are positioned such that image and/or video data is captured of the vehicle surroundings. For example, cameras may be located around the vehicle to obtain a 360-degree field of view of the vehicle surroundings. The camera system 230 includes processing means that is configured to analyse images and/or video obtained by the cameras to extract information therefrom. For example, deep learning and neural networks may be employed to analyse the images and/or video to perform segmentation analysis to identify objects in the vehicle's surroundings. For example, lane boundaries such as lane markings or road edges may be identified from camera images and/or video. Furthermore, the lane width of a lane in which the vehicle 1 is travelling may be determined by analyzing images obtained of the lane using an image recognition algorithm to recognize lane boundaries of the lane in which the vehicle is travelling. The distance between the boundaries delimiting the lane in which the vehicle is travelling may then be determined.

The GNSS module 240 may be configured to obtain the vehicle's current position using the global positioning system (GPS), GLONASS, Galileo or any other satellite navigation system.

The inertial measurement unit 250 includes one or more accelerometers, gyroscopes and magnetometers to measure the lateral acceleration of the vehicle in a manner known in the art. The inertial measurement unit 250 may be operable to obtain image data from the camera system 230 and positioning data from the GNSS module 240 to determine the lateral speed of the vehicle. The lateral speed of the vehicle may be thought of as the component of the vehicle speed directed towards the lane boundary.

The radar and/or lidar system 260 is operable to obtain information about the vehicle's surroundings. The radar and/or lidar systems 260 include hardware for transmitting and receiving radar and/or lidar signals and processing means for analysing the received signals to identify object detections in the vehicle environment. Radar and/or lidar data may be combined with camera vision data obtained from the camera system 230 using any suitable sensor fusion process in order to map the vehicle surroundings comprehensively.

The user interface 270 allows a user, such as the driver to interact with the vehicle system 200. The user interface 270 may include a display, one or more warning or information lights on a dashboard, audio output such as speakers, a microphone to allow audio commands and so forth. The user interface 270 also includes suitable processing means to process inputs and outputs from and to the user.

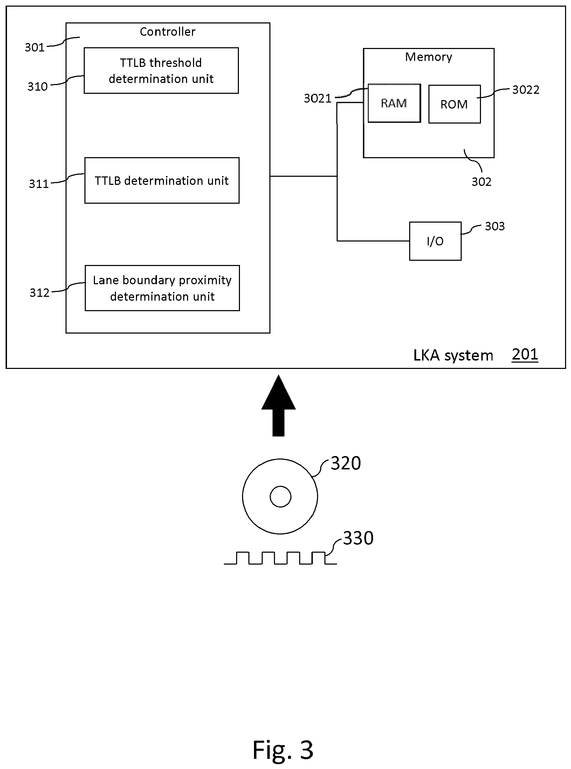

Figure 3 is a schematic illustration of the lane keeping assistance (LKA) system 201 in accordance with one embodiment.

The LKA system 201 includes a controller 301, memory 302, and input/output 303. The controller 301 includes a time to lane boundary (TTLB) threshold determination unit 310, a TTLB determination unit 311 and a lane boundary proximity determination unit 312. The controller 301 includes one or more processing means to perform the functions of the TTLB threshold determination unit 310, TTLB determination unit 311 and lane boundary proximity determination unit 312.

The memory 302 includes working memory (e.g. a random access memory 3021) and an instruction store storing code defining a computer program including computer-readable instructions which, when executed by the controller 301, cause the controller 301 to perform the processing operations described herein. The instruction store may include a ROM 3022 (e.g. in the form of an electrically-erasable programmable read-only memory (EEPROM) or flash memory) which is pre-loaded with the computer-readable instructions. Alternatively, the instruction store may include a RAM or similar type of memory, and the computer-readable instructions can be input thereto from a computer program product, such as a computer-readable storage medium such as a CDROM 320 etc. or a computer-readable signal 330 carrying the computer-readable instructions.

The TTLB threshold determination unit 310 is configured to obtain lateral acceleration data from the inertial measurement unit 250. The TTLB threshold determination unit 310 is configured to determine the TTLB threshold value using the lateral acceleration data obtained from the inertial measurement unit 250. The TTLB threshold determination unit 310 applies a saturated linear function to the lateral acceleration value of the vehicle 1 to calculate the TTLB threshold value. As such, the TTLB threshold value may vary depending on the current lateral acceleration of the vehicle 1. As the lateral acceleration of the vehicle 1 varies, for example as the vehicle drives along a bend in the road, the threshold for triggering a signal indicative of proximity to a lane boundary also varies.

In some embodiments, the TTLB threshold value is further dependent on the lateral speed of the vehicle 1 and on the width of the lane. Therefore, these properties can also be obtained and taken into account by the TTLB threshold determination unit 310 to determine the TTLB threshold value so that a dynamic triggering mechanism, based on current road conditions, may be provided.

The TTLB determination unit 311 is configured to determine the TTLB value. In order to determine the TTLB value, the TTLB determination unit 311 may obtain and analyse images obtained from the camera system 230 to determine the distance to the lane boundary. The lateral speed of the vehicle 1 may be obtained from the inertial measurement system 250. The TTLB value may thus be calculated as the distance to the lane boundary divided by the lateral speed of the vehicle 1. The TTLB determination unit 311 may be operable to determine which boundary of the lane the vehicle 1 is moving towards. For example, the TTLB determination unit 311 may determine, using images from the camera system 230 that the vehicle is moving towards the left hand lane boundary or the right hand lane boundary.

The lane boundary proximity determination unit 312 is configured to compare the calculated TTLB value with the TTLB threshold value. If the comparison of the TTLB value with the TTLB threshold value satisfies a condition for generating a signal indicative of vehicle proximity to a lane boundary then such signal is generated. The signal is then output. Outputting the signal may be performed by outputting a warning signal to the driver via the user interface 270, for example an audio and/or visual signal such as a warning light or text displayed on the dashboard. Additionally or alternatively, the signal may be a signal output to the vehicle control system 220 to correct the vehicle course without driver intervention to prevent the vehicle from leaving the current lane.

The saturated linear function used in embodiments of the present invention will now be discussed.

Equation 1 gives the expression used to determine the TTLB threshold value based on the lateral acceleration of the vehicle.

Equation (1):

$$TTLthresh(acc_{lat}) =$$

$$\max(s_{min}, \min(s_{max}, k * acc_{lat})) * g$$

with

$$k = \frac{(s_{max} - s_{min})}{(a_{min} - a_{max})}$$

where:

$acc_{lat}$ is the measured lateral acceleration of the vehicle;

$s_{max}$, $s_{min}$ are tunable default saturation points for *TTLBthresh* in the linear equation;

$a_{max}$, $a_{min}$ are tunable default saturation points for measured lateral acceleration in linear equation; and

$g$ is a tunable overall scaling of the TTLB threshold function.

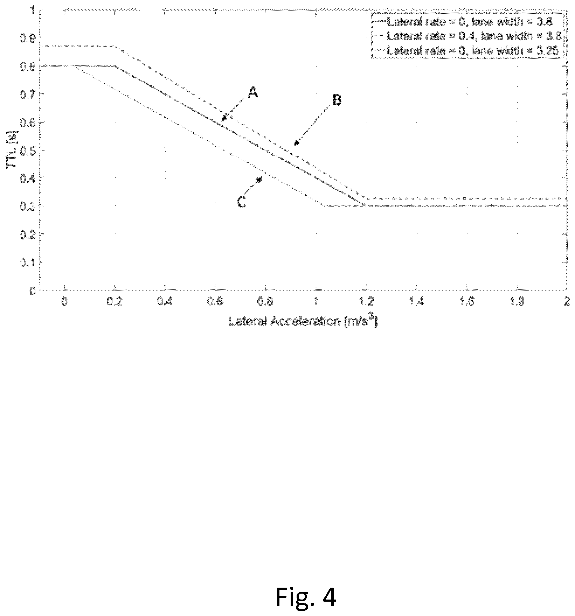

Figure 4 is a plot showing the dependency of TTLB threshold value on the lateral acceleration of the vehicle. Line A shown in Figure 4 shows the TTLB threshold as a saturated linear function of the lateral acceleration of the vehicle. As such, the point at which a signal indicating proximity to a lane boundary is triggered is dependent on the lateral acceleration of the vehicle.

The use of the saturated linear function removes the need for maintaining various look up tables charting different road conditions. This requires less use of computer memory. Furthermore, the use of the saturated linear function is more intuitive for a developer to understand, compared to the use of look up tables, which simplifies the triggering mechanism and also the tuning process. Since the function is linear, the triggering behaviour feels consistent and predictable to the driver.

Since the function is dependent on lateral acceleration, the different triggering points due to driving towards an inner edge of a curve or due to driving towards an outer edge of a curve are inherently built in to the function. This is in contrast to prior art systems where separate LUTs are maintained for scenarios where the vehicle is approaching the inner edge of the curve or the outer edge of the curve, respectively.

For example, for the driver to go out of his/her lane at the inner edge of the curve, the driver would need to steer more than the road curves, resulting in a high lateral acceleration. On the other hand, for the driver to go out of the lane at the outer edge of the curve, the driver needs to steer less than the road curves, resulting in a lower lateral acceleration. If the driver is steering more than what is required to stay on the road (which means that the vehicle has a relatively high lateral acceleration), one can assume that the driver is somewhat attentive and can trigger the LKA system later. Furthermore, if the vehicle is driven towards an inner curve, the steering required to bring the vehicle back into its original lane is quite low, which also allows a later trigger.

If the driver is instead steering less than what the curve requires (which means that the vehicle has a relatively low lateral acceleration), it can be assumed that the driver might be inattentive and should thus trigger the LKA system earlier. Moreover, since the vehicle is being steered too little if approaching the outer edge of the curve, a larger steering intervention is required to bring the vehicle back into its original lane, compared to the inner curve scenario. Thus, an earlier LKA trigger is again desirable to avoid departing the lane.

In embodiments where the saturated linear function is dependent on the lateral speed of the vehicle and the lane width as well as the lateral acceleration, the saturated linear function used to determine the TTLB threshold value (*TTLBthresh*) may take the form shown in Equation 2.

Equation (2):

$$TTLBthresh(acc_{lat}, rate_{lat}, width_{lane}) =$$

$$\max(s_{min}, \min(s_{max}, k * acc_{lat} + m(width_{lane}))) * \left(\frac{1}{r_{gain(rate_{lat})}}\right) * g$$

where:

acc*lat* is the measured lateral acceleration of the vehicle;
rate*lat* is the lateral speed of the vehicle towards the lane boundary;
width*lane* is the measured width of lane in which the vehicle is currently travelling. with

$$k = \frac{(s_{max} - s_{min})}{(a_{min} - a_{max})}$$

where:

$s_{max}$, $s_{min}$ are tunable default saturation points for *TTLBthresh* in the linear equation;
$a_{max}$, $a_{min}$ are tunable default saturation points for measured lateral acceleration in linear equation; and
g is a tunable overall scaling of the TTLB threshold function.

Further expressions used in Equation (2) will now be defined.

$$m(width_{lane}) = (s_{max} - a_{min} * k) * l_{gain}(width_{lane})$$

$$l_{gain}(width_{lane}) = \frac{1}{(\max\ (lw_{scaling,min},\ \min\ (lw_{scaling,max},\ k_{lw}*width_{lane}+m_{lw}))}$$

$$k_{lw} = \frac{lw_{scaling,min} - lw_{scaling,\ max}}{(lw_{max} - lw_{min})}$$

$lw_{max}$, $lw_{min}$ are tunable parameters used to define the interval of measured lane width in which scaling of the TTLB threshold value is performed.

$lw_{scaling,max}$, $lw_{scaling,\ min}$ are tunable parameters to determine an amount of scaling due to lane width.

$$m_{lw} = lw_{scalingmin} - lw_{max} * k_{lw}$$

$$r_{gain} = \max\ \left(g_{lrscaling,max},\ 1 - \left(\frac{rate_{lat}}{rate_{lat,\ max}}\right) * \left(1 - g_{lrscaling,max}\right)\right)$$

$g_{lrscaling,max}$ is a tunable scaling term used to influence maximum scaling allowed by the lateral speed of the vehicle.

$rate_{lat,max}$ is a tunable normalization factor for vehicle lateral speed towards the lane boundary.

Lines Band C plotted in Figure 4 show the dependency of TTLB threshold value on lateral speed and lane width. If the vehicle has a high lateral speed directed towards the lane boundary, the LKA system needs to react earlier to prevent the vehicle from departing the lane. However, when driving on narrow roads, the margins to the lane boundaries are smaller and the TTLB value would automatically be lower. In these scenarios, the LKA system may be triggered later to avoid unnecessary triggering of the lane boundary proximity signal.

Lines B and C in Figure 4 illustrate how the lateral speed and lane width affect the determination of the TTLB threshold value. A higher lateral speed toward the lane boundary shifts the entire line up compared with line A, as represented by line B. This results in a higher TTLB threshold value for the same lateral acceleration value which leads to earlier triggering of the LKA system at higher lateral speeds compared with the scenario represented by line A.

Similarly, it can be seen that, with a narrower lane width, the line is shifted to the left, as represented by line C in Figure 4, which results in a lower TTLB threshold value for the same lateral acceleration. This leads to a later triggering of the LKA system compared with the scenario represented by line A.

Furthermore, the function can also be shifted up (as represented in Figure 4) which corresponds to earlier triggering of the LKA system 201, if the lane boundary is determined to be a road edge instead of a lane marker. Alternatively, the function can also be shifted up (corresponding to earlier triggering of the LKA system 201) if an oncoming vehicle is detected, for example by the camera system 230, on the other side of the triggering lane boundary.

Such further road conditions may be taken into account by applying an additional scaling factor in response to determining that a particular road condition is present. For example, the TTLB threshold determination unit 310 may analyse images obtained from the camera system 230. If oncoming traffic is identified in a lane bordering the lane in which the vehicle is travelling then an oncoming traffic weighting may be applied to the saturated linear function. Likewise, if the TTLB threshold determination unit 310 may identify from images obtained from the camera system 230 that the lane boundary is a road edge then a road edge weighting may be applied to the saturated linear function.

The tunable parameters described above in Equations 1 and 2 allow engineers to tune the response of the LKA system 200 to possible lane departure events. An advantage of embodiments of the present invention is that the number of parameters that need to be tuned is much lower than the number of parameters that require tuning when numerous LUTs need to be maintained.

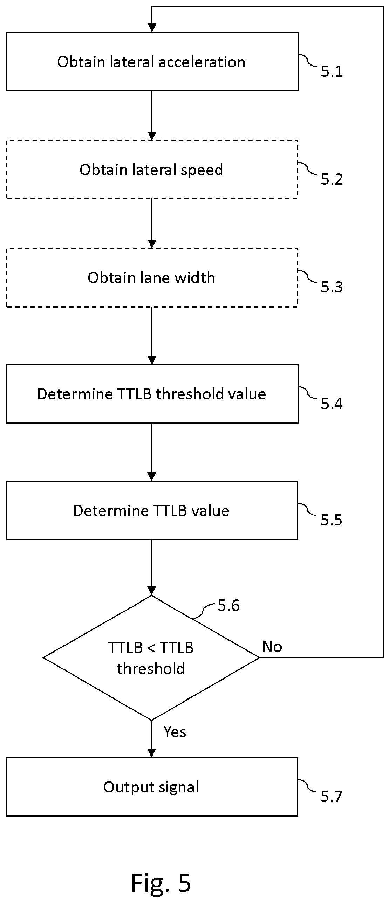

Figure 5 is a flow chart illustrating operations carried out by the LKA system 201 in order to detect possible lane departure events. In this example, the vehicle 1 is being driven along a road having one or more lanes.

At step 5.1, the TTLB threshold determination unit 310 obtains lateral acceleration data of the vehicle 1. The lateral acceleration data may be obtained from the inertial measurement unit 250. In embodiments where, where the saturated linear function is dependent on the lateral speed and the lane width, the TTLB threshold determination unit 310 obtains the vehicle's lateral speed at step 5.2 and obtains the lane width of the lane in which the vehicle is currently travelling at step 5.3.

At step 5.4, the TTLB threshold determination unit 310 determines a value for the TTLB threshold value. In one embodiment, the TTLB threshold value is determined by inputting the lateral acceleration value into Equation 1 above. In another embodiment, the TTLB threshold value is determined by inputting the lateral acceleration value, the lateral speed value and the lane width value into Equation 2 above.

At step 5.5, the TTLB determination unit 311 determines the current TTLB value for the vehicle. The current TTLB value may be determined by dividing the distance to the lane boundary by the lateral speed of the vehicle.

At step 5.6, the lane boundary proximity determination unit 312 compares the current TTLB value with the TTLB threshold value determined at step 5.4. If the current TTLB threshold value satisfies a condition for triggering a signal indicative of proximity to a lane boundary, for example if the current TTLB value is lower than the TTLB threshold value then a signal is output at step 5.7.

The signal indicative of proximity to a lane boundary, which may also be thought of as a signal indicating a lane departure event may be a warning signal output as an audio signal and/or a warning light or warning message on the display of the vehicle dashboard. Additionally or alternatively, the signal may be output to the vehicle control system 220 to cause a change in the direction of the vehicle. The vehicle control system 220 may then adjust the steering of the vehicle and/or apply the brake to prevent the vehicle from departing the lane.

If the current TTLB value does not satisfy the triggering condition then the TTLB threshold determination unit continues to monitor the lateral acceleration of the vehicle at step 5.1.

By virtue of the foregoing capabilities of the example aspects described herein, which are rooted in computer technology, the example aspects described herein improve computers and computer processing/functionality, and also improve the field(s) of at least autonomous driving. In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures. Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result. Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above. Included in the programming and/or software of the system are software modules for implementing the procedures described herein. In some example embodiments herein, a module includes software, although in other example embodiments herein, a module includes hardware, or a combination of hardware and software.

While various embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims.

It is also to be understood that any procedures recited in the claims need not be performed in the order presented.

While this specification contains many specific embodiment details, these should not be construed as limitations on what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description.

**Claims**

1. A computer-implemented method of detecting a lane departure event, the method comprising:

    obtaining a lateral acceleration value of the vehicle;
    determining a time-to-lane boundary, TTLB, threshold value using a saturated linear function of the lateral acceleration value of the vehicle;
    determining a current TTLB value of the vehicle with respect to a lane boundary;
    comparing the current TTLB value to the TTLB threshold value; and
    outputting a signal indicative of vehicle proximity to the lane boundary if the current TTLB value satisfies a triggering condition with respect to the TTLB threshold value.

2. The method of claim 1, further comprising determining a lateral speed value of the vehicle towards the lane boundary and a lane width value of the lane in which the vehicle is travelling.

3. The method of claim 2, wherein the saturated linear function used to determine the TTLB threshold value is a saturated linear function of the lateral speed of the vehicle towards the lane boundary, the lane width value and the lateral acceleration value of the vehicle.

4. The method of claim 2 or claim 3, wherein determining the lane width comprises analysing images of a road surface obtained from a camera system of the vehicle.

5. The method of any preceding claim, wherein obtaining a lateral acceleration value of the vehicle comprises obtaining lateral acceleration data from an inertial measurement unit of the vehicle.

6. The method of any preceding claim, further comprising determining if an additional traffic condition is present; and applying a weighting associated with the additional traffic condition to the saturated linear function in response to determining that the additional traffic condition is present.

7. The method of claim 6, wherein the additional traffic condition is an oncoming traffic condition.

8. The method of claim 6, wherein the additional traffic condition is a road edge condition.

9. The method of any preceding claim, wherein outputting a signal indicative of vehicle proximity to a lane boundary comprises outputting a control signal to a vehicle control module to cause a correction to the vehicle course.

10. The method of any preceding claim, wherein outputting a signal indicative of vehicle proximity to a lane boundary comprises outputting a warning signal to a driver of the vehicle.

11. A computer program comprising computer-readable instructions which, when executed by a processor, cause the processor to execute the method of any preceding claim.

12. A lane keeping assistance, LKA, system for detecting a lane departure event of a vehicle, the lane keeping assistance system comprising:

a time to lane boundary, TTLB, threshold determination unit configured to:

obtain a lateral acceleration value of the vehicle; and
determine a TTLB threshold value using a saturated linear function of the lateral acceleration value of the vehicle;

a TTLB determination unit configured to:
determine a current TTLB value of the vehicle with respect to a lane boundary; and
a lane boundary proximity determination unit configured to:

compare the current TTLB value to the TTLB threshold value; and
output a signal indicative of vehicle proximity to the lane boundary if the current TTLB value satisfies a triggering condition with respect to the TTLB threshold value.

13. The LKA system of claim 12, wherein the TTLB threshold determination unit is further configured to obtain a lateral speed value of the vehicle towards the lane boundary and a lane width value of the lane in which the vehicle is travelling.

14. The LKA system of claim 13, wherein the saturated linear function used to determine the TTLB threshold value is a saturated linear function of the lateral speed of the vehicle towards the lane boundary, the lane width value and the lateral acceleration value of the vehicle.

15. The LKA system of any one of claims 12 to 14, wherein the TTLB threshold determination unit is further configured to:

determine if an additional traffic condition is present; and
apply a weighting associated with the additional traffic condition to the saturated linear function in response to determining that the additional traffic condition is present.

**Patentansprüche**

1. Computer-implementiertes Verfahren zum Erkennen eines Fahrspurabweichungsereignisses, wobei das Verfahren umfasst:

Erhalten eines Wertes für die Querbeschleunigung des Fahrzeugs;
Bestimmen einer Zeit-bis-zur-Fahrspurbegrenzung, TTLB, -Schwellenwertes unter Verwendung einer gesättigten linearen Funktion des Querbeschleunigungswertes des Fahrzeugs;
Bestimmen eines aktuellen TTLB-Wertes des Fahrzeugs in Bezug auf eine Fahrspurbegrenzung;
Vergleichen des aktuellen TTLB-Wertes mit dem TTLB-Schwellenwert; und
Ausgeben eines Signals, das die Nähe des Fahrzeugs zur Fahrspurbegrenzung anzeigt, wenn der aktuelle TTLB-Wert eine Auslösebedingung in Bezug auf den TTLB-Schwellenwert erfüllt.

2. Verfahren nach Anspruch 1, weiter umfassend Bestimmen eines Wertes für die seitliche Geschwindigkeit des Fahrzeugs in Richtung der Fahrspurbegrenzung und eines Wertes für die Fahrspurbreite der Fahrspur, auf der das Fahrzeug fährt.

3. Verfahren nach Anspruch 2, wobei die gesättigte lineare Funktion, die verwendet wird, um den TTLB-Schwellenwert zu bestimmen, eine gesättigte lineare Funktion der seitlichen Geschwindigkeit des Fahrzeugs in Richtung der Fahrspurbegrenzung, des Fahrspurbreitenwertes und des Querbeschleunigungswertes des Fahrzeugs ist.

4. Verfahren nach Anspruch 2 oder Anspruch 3, wobei das Bestimmen der Fahrspurbreite das Analysieren von Bildern einer Straßenoberfläche umfasst, die von einem Kamerasystem des Fahrzeugs erhalten wurden.

EP 4 108 534 B1

**5.** Verfahren nach einem vorstehenden Anspruch, wobei das Erhalten eines Querbeschleunigungswertes des Fahrzeugs das Erhalten von Querbeschleunigungsdaten von einer Trägheitsmesseinheit des Fahrzeugs umfasst.

**6.** Verfahren nach einem vorstehenden Anspruch, weiter umfassend Bestimmen, ob eine zusätzliche Verkehrsbedingung vorliegt; und
Anwenden einer mit der zusätzlichen Verkehrsbedingung verbundenen Gewichtung auf die gesättigte lineare Funktion als Reaktion auf das Bestimmen, dass die zusätzliche Verkehrsbedingung vorliegt.

**7.** Verfahren nach Anspruch 6, wobei die zusätzliche Verkehrsbedingung eine Gegenverkehrsbedingung ist.

**8.** Verfahren nach Anspruch 6, wobei die zusätzliche Verkehrsbedingung eine Straßenrandbedingung ist.

**9.** Verfahren nach einem vorstehenden Anspruch, wobei das Ausgeben eines Signals, das die Nähe des Fahrzeugs zu einer Fahrspurbegrenzung anzeigt, das Ausgeben eines Steuersignals an ein Fahrzeugsteuermodul umfasst, um eine Korrektur des Fahrzeugkurses zu bewirken.

**10.** Verfahren nach einem vorstehenden Anspruch, wobei das Ausgeben eines Signals, das die Nähe des Fahrzeugs zu einer Fahrspurbegrenzung anzeigt, das Ausgeben eines Warnsignals an einen Fahrer des Fahrzeugs umfasst.

**11.** Computerprogramm, das computerlesbare Anweisungen umfasst, die, wenn sie von einem Prozessor ausgeführt werden, den Prozessor veranlassen, das Verfahren nach einem vorstehenden Anspruch auszuführen.

**12.** Spurhalte-Assistenzsystem, LKA, zum Erkennen eines Fahrspurabweichungsereignisses eines Fahrzeugs, wobei das Spurhalte-Assistenzsystem umfasst:

eine Einheit zur Bestimmung der Zeit-bis-zur-Fahrspurbegrenzung, TTLB, - Schwellenwertes, die konfiguriert ist, um:

einen Querbeschleunigungswert des Fahrzeugs zu erhalten; und
einen TTLB-Schwellenwert unter Verwendung einer gesättigten linearen Funktion des Querbeschleunigungswertes des Fahrzeugs zu bestimmen;

eine TTLB-Bestimmungseinheit, die konfiguriert ist, um:
einen aktuellen TTLB-Wert des Fahrzeugs in Bezug auf eine Fahrspurbegrenzung zu bestimmen; und
eine Einheit zur Bestimmung der Nähe zur Fahrspurbegrenzung, die konfiguriert ist, um:

den aktuellen TTLB-Wert mit dem TTLB-Schwellenwert zu vergleichen; und
ein Signal auszugeben, das die Nähe des Fahrzeugs zur Fahrspurbegrenzung anzeigt, wenn der aktuelle TTLB-Wert eine Auslösebedingung in Bezug auf den TTLB-Schwellenwert erfüllt.

**13.** LKA-System nach Anspruch 12, wobei die Einheit zur Bestimmung des TTLB-Schwellenwertes weiter konfiguriert ist, um einen seitlichen Geschwindigkeitswert des Fahrzeugs in Richtung der Fahrspurbegrenzung und einen Fahrspurbreitenwert der Fahrspur, auf der das Fahrzeug fährt, zu erhalten.

**14.** LKA-System nach Anspruch 13, wobei die gesättigte lineare Funktion, die verwendet wird, um den TTLB-Schwellenwert zu bestimmen, eine gesättigte lineare Funktion der seitlichen Geschwindigkeit des Fahrzeugs in Richtung der Fahrspurbegrenzung, des Fahrspurbreitenwertes und des Querbeschleunigungswertes des Fahrzeugs ist.

**15.** LKA-System nach einem der Ansprüche 12 bis 14, wobei die TTLB-Schwellenwert-Bestimmungseinheit weiter konfiguriert ist, um:

zu bestimmen, ob eine zusätzliche Verkehrsbedingung vorliegt; und
eine mit der zusätzlichen Verkehrsbedingung verbundene Gewichtung auf die gesättigte lineare Funktion als Reaktion auf das Bestimmen anzuwenden, dass die zusätzliche Verkehrsbedingung vorliegt.

**Revendications**

1. Procédé mis en oeuvre par ordinateur permettant de détecter un événement de sortie de voie, le procédé comprenant :

   l'obtention d'une valeur d'accélération latérale du véhicule ;
   la détermination d'une valeur seuil de temps jusqu'à la limite de la voie, TTLB, en utilisant une fonction linéaire saturée de la valeur d'accélération latérale du véhicule ;
   la détermination d'une valeur de TTLB actuelle du véhicule par rapport à une limite de voie ;
   la comparaison de la valeur de TTLB actuelle à la valeur seuil de TTLB ; et
   la délivrance d'un signal indiquant une proximité de véhicule à la limite de voie si la valeur de TTLB actuelle satisfait une condition de déclenchement par rapport à la valeur seuil de TTLB.

2. Procédé selon la revendication 1, comprenant en outre la détermination d'une valeur de vitesse latérale du véhicule vers la limite de voie et d'une valeur de largeur de voie de la voie dans laquelle le véhicule se déplace.

3. Procédé selon la revendication 2, dans lequel la fonction linéaire saturée utilisée pour la détermination de la valeur seuil de TTLB est une fonction linéaire saturée de la vitesse latérale du véhicule vers la limite de voie, la valeur de largeur de voie et la valeur d'accélération latérale du véhicule.

4. Procédé selon la revendication 2 ou la revendication 3, dans lequel la détermination de la largeur de voie comprend l'analyse d'images d'une surface de route obtenues à partir d'un système de caméra du véhicule.

5. Procédé selon une quelconque revendication précédente, dans lequel l'obtention d'une valeur d'accélération latérale du véhicule comprend l'obtention de données d'accélération latérale à partir d'une unité de mesure d'inertie du véhicule.

6. Procédé selon une quelconque revendication précédente, comprenant en outre la détermination établissant si une condition de circulation supplémentaire est présente ; et
   l'application d'une pondération associée à la condition de circulation supplémentaire à la fonction linéaire saturée en réponse à la détermination du fait que la condition de circulation supplémentaire est présente.

7. Procédé selon la revendication 6, dans lequel la condition de circulation supplémentaire est une condition de circulation en sens inverse.

8. Procédé selon la revendication 6, dans lequel la condition de circulation supplémentaire est une condition de bord de route.

9. Procédé selon une quelconque revendication précédente, dans lequel la délivrance d'un signal indiquant une proximité de véhicule à une limite de voie comprend la délivrance d'un signal de commande à un module de commande de véhicule pour entraîner une correction au parcours de véhicule.

10. Procédé selon une quelconque revendication précédente, dans lequel la délivrance d'un signal indiquant une proximité de véhicule à une limite de voie comprend la délivrance d'un signal d'avertissement à un conducteur du véhicule.

11. Programme informatique comprenant des instructions lisibles par ordinateur qui, lorsqu'elles sont exécutées par un processeur, amènent le processeur à exécuter le procédé selon une quelconque revendication précédente.

12. Système d'aide au maintien dans la voie, LKA, permettant de détecter un événement de sortie de voie d'un véhicule, le système d'aide au maintien dans la voie comprenant :

    une unité de détermination de seuil de temps jusqu'à la limite de la voie, TTLB, configurée pour :

       obtenir une valeur d'accélération latérale du véhicule ; et
       déterminer une valeur seuil de TTLB en utilisant une fonction linéaire saturée de la valeur d'accélération latérale du véhicule ;

    une unité de détermination de TTLB configurée pour :

déterminer une valeur de TTLB actuelle du véhicule par rapport à une limite de voie ; et
une unité de détermination de proximité de limite de voie configurée pour :

comparer la valeur de TTLB actuelle à la valeur seuil de TTLB ; et
délivrer un signal indiquant une proximité de véhicule à la limite de voie si la valeur de TTLB actuelle satisfait une condition de déclenchement par rapport à la valeur seuil de TTLB.

13. Système de LKA selon la revendication 12, dans lequel l'unité de détermination de seuil de TTLB est en outre configurée pour obtenir une valeur de vitesse latérale du véhicule vers la limite de voie et une valeur de largeur de voie de la voie dans laquelle le véhicule se déplace.

14. Système de LKA selon la revendication 13, dans lequel la fonction linéaire saturée utilisée pour la détermination de la valeur seuil de TTLB est une fonction linéaire saturée de la vitesse latérale du véhicule vers la limite de voie, la valeur de largeur de voie et la valeur d'accélération latérale du véhicule.

15. Système de LKA selon l'une quelconque des revendications 12 à 14, dans lequel l'unité de détermination de seuil de TTLB est en outre configurée pour :

déterminer si une condition de circulation supplémentaire est présente ; et
appliquer une pondération associée à la condition de circulation supplémentaire à la fonction linéaire saturée en réponse à la détermination que la condition de circulation supplémentaire est présente.

Fig. 1

Fig. 2

Fig. 3

Fig. 4

Obtain lateral acceleration  5.1

Obtain lateral speed  5.2

Obtain lane width  5.3

Determine TTLB threshold value  5.4

Determine TTLB value  5.5

5.6

TTLB < TTLB threshold

No

Yes

Output signal  5.7

Fig. 5

**EP 4 108 534 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070069874 A1